# EUROPÄISCHE PATENTSCHRIFT

(11) **EP 1 066 755 B1**
(45) Veröffentlichungstag und Bekanntmachung des Hinweises auf die Patenterteilung: **28.07.2004**
(21) Anmeldenummer: 00120069.0
(22) Anmeldetag: 02.04.1997
(51) Int. Cl.: A01K 9/00

(54) **Verfahren und Eirichtung zum Versorgen von Haustieren mit einem flüssigen Nahrungsmittel**
Method and means for supplying animals with liquid food
Procédé et dispositif pour alimenter des animaux avec un aliment liquide

(30) Priorität: 02.08.1996 DE 29613366 U; 02.04.1996 DE 29605928 U
(43) Veröffentlichungstag der Anmeldung: 10.01.2001
(62) Teilanmeldung aus: 97105481.2
(73) Patentinhaber: Förster, Martin, 78234 Engen (DE)
(72) Erfinder: Förster, Martin, 78234 Engen (DE)
(74) Vertreter: Weiss, Peter, Dr. rer. nat.

(56) Entgegenhaltungen:
- EP-A- 0 064 597
- EP-A- 0 310 193
- DE-U- 9 013 887
- FR-A- 1 154 433
- FR-A- 2 157 153
- GB-A- 2 155 749
- NL-A- 6 602 890
- US-A- 2 280 410

## Beschreibung

Die Erfindung betrifft ein Verfahren zur Versorgung von Haustieren mit einem flüssigen Nahrungsmittel, das aus einem Vorratsbehälter, insbesondere einem Mischbehälter eines Tränkeautomaten, über eine Saugleitung zu einer Saugstelle gelangt, wobei zum Antränken von Tieren, insbesondere Jungtieren durch in Betrieb nehmen einer in die Saugleitung eingesetzten Pumpe Nahrungsmittel zur Saugstelle befördert wird.

Bei der heutigen Mast von Kälbern, Ferkeln, Lämmer od. dgl. werden in der Regel Tränkeautomaten verwendet, bei denen beispielsweise ein Milchpulver in Wasser eingemischt und einer Saugstelle zugeführt wird. Das Haustier kann an dieser Saugstelle das flüssige Nahrungsmittel entnehmen, wobei die Zugabe des Nahrungsmittels dosiert erfolgt. Meist befindet sich jedoch in einem Stall eine Mehrzahl von zu fütternden Haustieren, so dass auch eine Mehrzahl von Saugstellen angeordnet sein sollten, damit eine einigermassen gerechte Zuteilung des Nahrungsmittels erfolgt. Bei den bekannten Tränkeautomaten geschieht jedoch das Zuteilen nur durch das Anrühren des flüssigen Nahrungsmittels. Wird beispielsweise ein halber Liter angerührt, so kann das entsprechende Kalb im Maximum diesen halben Liter saufen.

Auch heute gibt es bereits Tränkeautomaten, die mehr als eine Saugstelle mit Nahrungsmittel versorgen. Auch bei diesen Tränkeautomaten wird lediglich eine bestimmte Menge an flüssigem Nahrungsmittel angerührt. Wird an einer Saugstelle gesaugt, so ist die andere Saugstelle abgesperrt, so dass dort ein trinkwilliges Kalb nichts entnehmen kann. Dies ist unerwünscht.

Ferner ist aus dem Stand der Technik bekannt, dass Anmischbehälter gleichzeitig als Messbehälter zu Ermittlung der Verzehrmenge verwendet werden. Dabei werden zwei unterschiedliche Ausführungsmöglichkeiten unterschieden.

Einerseits werden Tränkeautomaten mit mehreren Anmischbehältern verwendet, welche gleichzeitig als Messbehälter dienen. Andererseits sind Tränkeautomaten mit Anrührbehälter bekannt, bei welchen die Tränke bzw. das Nahrungsmittel durch Gefälle oder durch Pumpen in mehrere einzelne Messbehälter befördert wird. Diesen Messbehälter ist dann jeweils eine Saugstelle zugeordnet. Nachteilig daran ist, dass derartige Tränkeautomaten und insbesondere deren offene Messeinrichtungen äusserst aufwendig zu reinigen sind, da dies auf manuelle Weise geschieht. Ferner sind offene Messeinrichtungen aus Hygienegründen nicht besonders geignet, da Narungsmittel schneller verdirbt. Zudem sind derartige Tränkeautomaten sehr kostenintensiv herzustellen und zu warten.

Aus dem Stand der Technik sind Mengenregler und Mengenmesseinrichtungen bekannt, welche den Durchfluss und Flussgeschwindigkeit an Nahrungsmittel messen und regeln. Diese sind äusserst teuer und kompliziert aufgebaut. Da das zu messende Medium bzw. das Nahrungsmittel aus verschiedenen Lebensmittelkomponenten, wie bspw. Wasser, Milchpulver, Kraftfutter etc. und quellenden Komponenten besteht, deren Zusammensetzungen sich ständig ändern, weist das Nahrungsmittel unterschiedlichste Eigenschaften auf. Ein exaktes Strömungsverhalten bspw. beim Pumpen und beim Messen zu ermitteln und zu bestimmen ist ohne derartig komplexe und teure Mengenmesseinrichtungen bisher nicht möglich.

Die GB 2 155 749 A offenbart eine Vorrichtung sowie ein Verfahren zum Bestimmen der entnommenen Menge an Nahrungsmittel für Tiere. Dabei wird Nahrungsmittel über eine Schlauchpumpe einem Reservoire zugeführt, welches an eine Saugstelle anschliesst.

Die EP 0 310 193 A1 offenbart eine Vorrichtung zum automatischen Füttern von Tieren mit einem Ventil sowie einer Abklemmvorrichtung für eine Nahrungsmittelleitung.

Der vorliegenden Erfindung liegt die Aufgabe zugrunde ein Verfahren sowie eine Einrichtung zum Durchführen des Verfahrens zu schaffen, bei welchen auf einfache und exakte Weise ermittelt werden kann, welche Menge an flüssigem Nahrungsmittel ein Haustier zu sich genommen hat. Ferner soll das Ansaugen von Nahrungsmittel an der Saugstelle erleichtert werden, wenn junge Kälber an das Ansaugen angelernt werden müssen. Zudem sollen Herstellungskosten, Wartungs- und insbesondere Reinigungsaufwand reduziert werden.

Zur Lösung dieser Aufgabe führen die Merkmale des Kennzeichens des Patentanspruches 1 sowie die der nebengeordneten Patentansprüche.

In der heutigen Kälberhaltung sind die mit Nahrungsmittel zu versorgenden Haustiere in der Regel mit einem Identifizierelement ausgerüstet, beispielsweise mit einem Transponder. Sobald ein bestimmtes Haustier an eine Saugstelle geht, wird es identifiziert. Mit einem Mengenmesselement kann nun exakt bestimmt werden, welches Haustier wieviel an flüssigem Nahrungsmittel in welcher Zeit zu sich genommen hat. Hierdurch ist es möglich, den Mastvorgang genau zu kontrollieren. Beispielsweise ist es auch möglich, den Gesundheitszustand eines Kalbes zu kontrollieren, wenn es über einen längeren Zeitraum hinweg nicht zur Saugstelle gekommen ist.

Eine Mengenmessung kann zum einen durch separate Mengenmesselemente erfolgen, die handelsüblich sind. Bevorzugt erfolgt sie allerdings durch ein bereits in der Einrichtung vorhandenes Bauelement. Beispielsweise ist dies ein Ventil, bevorzugt ein Magnetventil. Die Mengenmessung erfolgt durch die Messung der Öffnungszeit des Ventils.

Da eine Förderpumpe vorgesehen ist, kann auch diese zur Mengenmessung verwendet werden. Beispielsweise geschieht dies über die Messung der Laufzeit der Pumpe oder deren Umdrehungen.

Ferner ist es wichtig, das Saugverhalten der einzelnen Tiere individuell zu ermitteln. Kälber haben unterschiedliche Trinkverhalten, insbesondere saugen sie unterschiedlich stark an, so dass die Öffnungszeit allein kein genaues Mass für die getrunkene Menge ist. Auch gibt es Kälber die kurze und sehr starke Saugzüge machen, während andere kaum ziehen, für einen Zug aber sehr lange brauchen.

Eine Einrichtung zur Durchführung des Verfahrens sieht zumindest die Merkmale des Anspruchs 8 vor. Wie dies ausgestaltet ist, wurde oben beschrieben.

Desweiteren kann der Saugstelle ein Drucksensor vorgeschaltet sein. Bevorzugt wird er kurz vor der Saugstelle angeordnet. Der Abstand zur Saugstelle ist so bemessen, dass der Sensor die Nahrungsmittelzufuhr kurz vor der Saugstelle durch den Flüssigkeitsdruck abschaltet. Durch Saugen am Nuckel wird die Flüssigkeit angehoben und der Druckschalter schaltet die Förderung von Nahrungsmittel wieder ein. Die verwendeten Magnetventile bzw. Pumpen werden ggfs. über Druck- bzw. Unterdrucksensoren in Betrieb gesetzt. Wird ein Unterdrucksensor gewählt, so schaltet dieser die Nahrungsmittelzufuhr direkt durch den erzeugten Unterdruck beim Saufen ein.

In dem Ausführungsbeispiel der Erfindung soll zwischen die Saugstelle und den Tränkeautomaten eine Förderpumpe eingeschaltet sein, wie dies in der DE-OS 36 13 887 beschrieben ist. Diese Förderpumpe hat den Sinn, das Tränken von insbesondere Jungtieren zu unterstützen. Zusammen mit dem erfindungsgemässen Mengenmesselement erfolgt eine ideale, gezielte Ernährung der Haustiere, insbesondere der Jungtiere.

Das Mengenmesselement kann separat zwischen Förderpumpe und Saugstelle angeordnet sein, es ist jedoch auch möglich, das Mengenmesselement direkt der Förderpumpe zuzuordnen, so dass allein schon aus der Tätigkeit der Förderpumpe selbst auf die Menge des geförderten flüssigen Nahrungsmittels geschlossen wird. Letztere Fall ist technisch weniger aufwendig.

Wie in der DE-OS 36 13 887 beschrieben, erfolgt die Steuerung der Förderpumpe über einen in der Saugleitung zur Saugstelle herrschenden Unterdruck. D.h., sobald beispielsweise ein Kalb zu saugen beginnt, wird die Förderpumpe eingeschaltet und unterstützt den Strom des flüssigen Nahrungsmittels. Bevorzugt soll im vorliegenden Ausführungsbeispiel noch ein zusätzlicher Schalter in diese Leitung zwischen Unterdrucksensor und Förderpumpe eingeschaltet sein, der es ermöglicht, die Förderpumpe so einzuschalten, dass eine geringe Menge an Nahrungsmittel aus dem Nuckel austritt. Hierdurch wird das Jungtier noch besser zur Nahrungsentnahme angereizt. Ähnlich ist dies auch beim Euter einer Kuh, wenn ein Kalb beispielsweise mit der Schnauze gegen eine Zitze stösst, da auch dann oft eine geringe Menge an Milch aus der Zitze herausspritzt und das Kalb zum Saugen anregt.

In dem Ausführungsbeispiel der vorliegenden Erfindung ist zwischen Mischbehälter und Saugstelle bzw. Nuckel eine Förderpumpe eingesetzt. Diese Förderpumpe wird bevorzugt vom Stall aus mittels eines Betätigungsschalters, der nahe dem Nuckel angeordnet ist, in Betrieb gesetzt. Dadurch wird das Nahrungsmittel aus dem Mischbehälter über die Saugleitung zur Saugstelle befördert und tritt heraus. Dies dient im wesentlichen dazu, junge Kälber an das Saugen bzw. Saufen an derartigen Saugstellen zu gewöhnen. Das junge Kalb bekommt sofort, wenn es an der Saugstelle saugt, das Nahrungsmittel. Es lernt sehr schnell alleine damit umzugehen.

Ist das junge Kalb dann später an den Nuckel bzw. die Saugstelle gewöhnt, so kann es, ohne dass die Pumpe betätigt wird, von alleine das Nahrungsmittel aus dem Mischbehälter ansaugen. Dies wird dadurch gewährleistet, dass die Förderpumpe im Stillstand einen Durchfluss ermöglicht. Dabei ist diese Förderpumpe so ausgelegt, dass das Nahrungsmittel in etwa widerstandslos die Förderpumpe durchströmen kann.

Auch bei dem Ausführungsbeispiel mit der Förderpumpe können zwischen Saugstelle und Förderpumpe, wenn dies gewünscht ist, Drucksensoren und Mengenmesselemente eingeschaltet sein, um die Pumpe in Betrieb zu setzen, wie dies oben ausführlich beschrieben ist.

Ein weiterer Vorteil einer derartigen Anordnung ist, dass mittels der Förderpumpe die Leitungen, die Förderpumpe selbst und die Saugstelle gereinigt werden können, wobei dann in den Mischbehälter beispielsweise Wasser oder Reinigungsmittel eingefüllt ist. Dazu kann bevorzugt die Förderpumpe auch vom Behälter aus angesteuert werden.

Bei mehreren Leitungen zu Saugstellen kann in jede Leitung eine Pumpe eingeschaltet sein, es ist jedoch auch möglich, zwei oder mehr Saugleitungen über eine Pumpe zu versorgen. Auf diese folgt dann ein Abzweigventil, welches auf die eine oder andere Saugleitung umgeschaltet wird. Dieses Umschalten beider Ventile geschieht in kurzen Abständen alternierend im Wechsel. Diese Unterbrechung hat auf das Saufverhalten der Kälbern keinen Einfluss. Da nur jeweils ein Ventil geöffnet ist, bleibt der Gesamtquerschnitt konstant, was einen konstanten Druck und ein gleichmässiges Zuführen von Nahrungsmittel zu Folge hat.

Wichtig bei der vorliegenden Erfindung ist auch, dass alle verwendeten Pumpen vor dem Einschalten der Magnetventile in Betrieb gesetzt werden. Dies geschieht bspw. mittels der Unterdrucksensoren. Damit werden Ungenauigkeiten beim Bestimmen und Messen von Mengen verhindert, da während des Einschaltvorganges die Leistung der Pumpe unterschiedlich ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Darstellung einer nicht erfindungsgemässen Einrichtung zum Versorgen von Haustieren mit einem flüssigen Nahrungsmittel;
Figur 2 eine schematische bzw. blockschaltbildliche Darstellung eines Ausführungsbeispiels einer Einrichtung zum Versorgen von Haustieren mit flüssigem Nahrungsmittel.

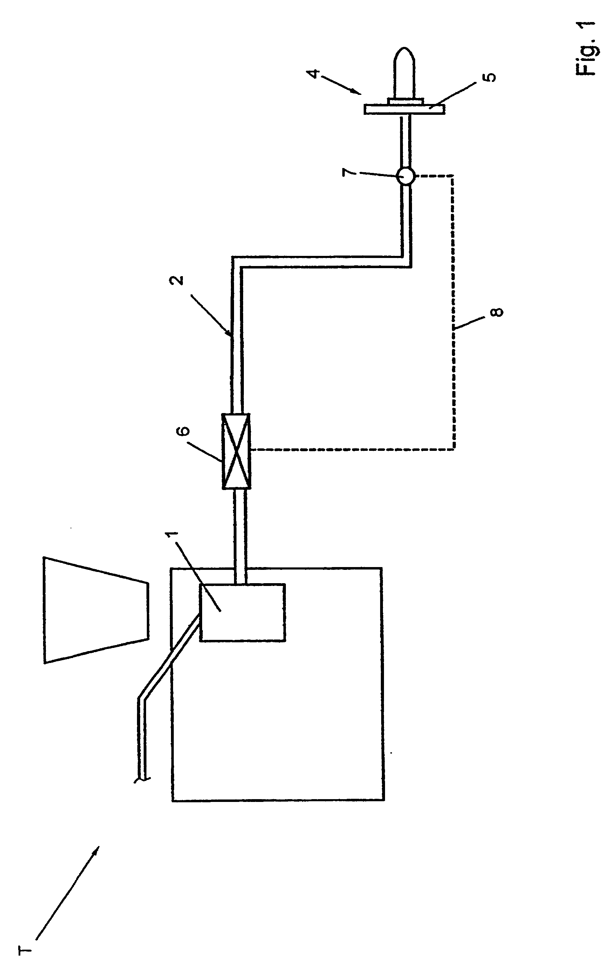

Gemäss Figur 1 wird flüssiges Nahrungsmittel in einen Mischbehälter 1 angerührt, wobei dieser Mischbehälter 1 Bestandteil eines allgemein bekannten Tränkeautomaten T sein kann, der hier nicht näher beschrieben ist. Nur bspw. wird hier auf die DE-OS 34 01 168 verwiesen.

Einem Auslauf der Saugleitung 2 in dem Mischbehälter 1 ist ein Sieb 11 zugeordnet, welches auch in der Gebrauchsmusteranmeldung 296 03 702.8 beschrieben ist. Dieses Sieb hat den Zweck, dass zum einen ungelöste Pulverklumpen zurückgehalten werden, zum anderen vermeidet das Gitter bzw. Sieb jedoch, dass Luftblasen, die beim Mischvorgang in dem Mischbehälter entstehen, in die Saugleitung 2 gelangen. Durch diese Luftblasen würde die Mengenmessung in ihrer Genauigkeit wesentlich verschlechtert. Auch ist vorgesehen, dass das Sieb 11 von einem Rührer in dem Mischbehälter 1 bzw. von an einem Rührer befestigten Borsten abgereinigt wird.

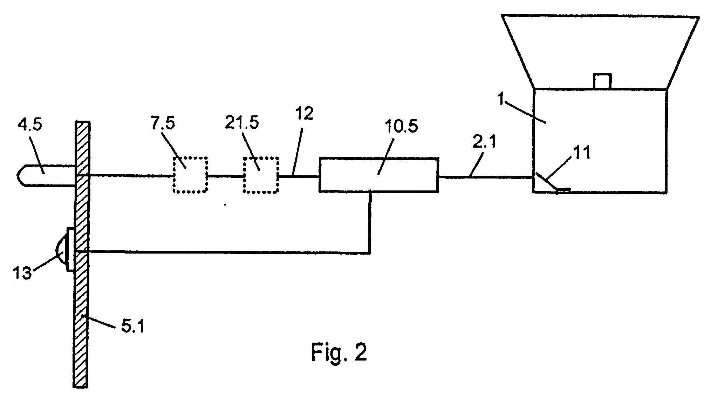

In dem Ausführungsbeispiel der vorliegenden Erfindung gemäss Figur 2 ist dem Mischbehälter 1 in einer Hauptleitung 2.1 eine Förderpumpe 10.5 nachgeschaltet, welche über eine Zuleitung 12 mit einem Nuckel 4.5 in Verbindung steht. Der Nuckel 4.5 ist an einer Halterung 5.1 festgelegt. Bevorzugt nahe dem Nuckel 4.5 befindet sich ein Schalter 13, über den die Förderpumpe 10.5 in Betrieb gesetzt werden kann. Durch Betätigen des Schalters 13 kann das Nahrungsmittel aus dem Mischbehälter 1 durch Inbetriebsetzen der Pumpe 10.5 zum Nuckel 4.5 befördert werden.

Der wesentliche Vorteil, der sich durch diese Anordnung ergibt, ist, dass unter Verwendung von Kreisel- oder Schneckenpumpen als Förderpumpen 10.5, welche beim Stillstand das Nahrungsmittel widerstandslos durch die Förderpumpe 10.5 durchfliessen lassen, das Kalb jederzeit an dem Nuckel 4.5 das Nahrungsmittel ansaugen kann.

Somit dient die Förderpumpe 10.5 in diesem Ausführungsbeispiel im wesentlichen nur dazu, das Nahrungsmittel aus dem Behälter 1 nach vorne zum Nuckel 4.5 zu befördern. Das Nahrungsmittel befindet sich somit auch ohne Ansaugen schon im Nuckel 4.5, und das Kalb kann sofort die Nahrung aufnehmen. Dies ist dann erwünscht, wenn das Kalb noch sehr klein ist und an das Nuckeln derartigen Vorrichtungen gewöhnt werden muss.

Im übrigen kann über die Pumpe 10.5, welche auch an dem Mischbehälter 1 angebracht sein kann, ein Reinigen der Hauptleitung 2.1, der Leitung 12 und des Nuckels 4.5 erfolgen. Hierzu wird Wasser und/oder Reinigungsmittel in den Mischbehälter 1 eingefüllt und durch die Leitungen 2.1 und 12 gepumpt.

Bei diesem Ausführungsbeispiel soll auch vorgesehen sein, dass ein Mengenmesselement 21.5 und/oder Drucksensor 7.5 zwischen Nuckel 4.5 und Förderpumpe 10.5 zwischengeschaltet ist/sind, um die Pumpe 10.5 einzuschalten und die Menge an Nahrungsmittel genau zu bestimmen. Diese können jedoch auch zwischen der Förderpumpe 10.5 und dem Mischbehälter 1 angeordnet werden.

Ist das Kalb an das Ansaugen mittels dem Nuckels 4.5 gewöhnt, so kann das Vorpumpen des Nahrungsmittels entfallen. Das Kalb kann dann das Nahrungsmittel direkt aus dem Behälter 1 ansaugen, wobei dieses widerstandlos durch die Förderpumpe 10.5 strömt. Eine Steuerung der Nahrungsmittelmenge kann dann durch das Mengenmesselement 21.5 erfolgen.

## Patentansprüche

1. Verfahren zur Versorgung von Haustieren mit einem flüssigen Nahrungsmittel, das aus einem Vorratsbehälter, insbesondere einem Mischbehälter (1) eines Tränkeautomaten, über eine Saugleitung (2) zu einer Saugstelle (4, 4.5) gelangt, wobei zum Antränken von Tieren, insbesondere Jungtieren durch in Betrieb nehmen einer in die Saugleitung (2) eingesetzten Pumpe (10.5) Nahrungsmittel zur Saugstelle (4.5) befördert wird,
**dadurch gekennzeichnet,**
**dass** nach einem Befördern von Nahrungsmittel aus dem Mischbehälter (1) zur Saugstelle (4.5) die Pumpe (10.5) bei Stillstand auf Durchfluss geschaltet wird.

2. Verfahren nach Anspruch 1, **dadurch gekennzeichnet, dass** zum in Betrieb nehmen der Pumpe (10.5) und zum Befördern des Nahrungsmittels aus dem Mischbehälter (1) zur Saugstelle (4.5) ein Schalter (13) nahe der Saugstelle (4.5) betätigt wird.

3. Verfahren nach Anspruch 1 oder 2, **dadurch gekennzeichnet, dass** zur Bestimmung und/oder zur Inbetriebnahme der Pumpe (10.5) in die Saugleitung (2) ein Mengenmesselement (21.5) und/oder ein Drucksensor (7.5) zwischen Saugstelle (4.5) und Förderpumpe (10.5) dazwischen geschaltet ist/sind und die Menge an Nahrungsmittel hierdurch exakt bestimmt wird.

4. Verfahren nach wenigstens einem der Ansprüche 1 oder 3, **dadurch gekennzeichnet, dass** in die Saugleitung (2) zumindest ein Ventil (6) eingeschaltet und die Menge des entnommenen flüssigen Nahrungsmittels über die Öffnungszeit des Ventils (6) ermittelt wird.

5. Verfahren nach wenigstens einem der Ansprüche 1 bis 4, **dadurch gekennzeichnet, dass** die Menge des entnommenen flüssigen Nahrungsmittels über zumindest eine in die Saugleitung (2) eingeschaltete Pumpe (10.5) ermittelt wird.

6. Verfahren nach wenigstens einem der Ansprüche 1 bis 5, **dadurch gekennzeichnet, dass** Druckschwankungen zur Mengenberechnung des Nahrungsmittels in der Saugleitung ermittelt und gegebenenfalls ausgeglichen werden und ggf. eine individuelle Sauggeschwindigkeit jedes Tieres über die Ventilöffnungszeit ermittelt und/oder ausgewertet und über Zu- oder Abschläge bei der Öffnungszeit ausgeglichen wird.

7. Verfahren nach wenigstens einem der Ansprüche 1 bis 6, **dadurch gekennzeichnet, dass** durch Zugeben von Wasser und/oder Reinigungsmittel in den Mischbehälter 81) und durch Betätigen des Schalters (13) eine Reinigung von Mischbehältern (1), Saugleitung (2), Pumpe (10.5) und Saugstelle (4.5) erfolgt.

8. Einrichtung zur Versorgung von Haustieren mit einem flüssigen Nahrungsmittel, das aus einem Vorratsbehälter, insbesondere einem Mischbehälter (1) eines Tränkeautomaten, über eine Saugleitung (2) zu einer Saugstelle (4, 4.5) gelangt, wobei eine Förderpumpe (10.5) in die Saugleitung (2) eingesetzt ist, **dadurch gekennzeichnet, dass** die Förderpumpe mit einem Schalter (13) zum manuellen in Betrieb setzen in Verbindung steht, wobei die Förderpumpe (10.5) bei Stillstand auf Durchfluss geschaltet und eine Verbindung zwischen Saugstelle (4.5) und Mischbehälter (1) zum nahezu widerstandslosen Ansaugen hergestellt ist.

9. Einrichtung zur Versorgung von Haustieren mit einem flüssigen Nahrungsmittel, das aus einem Vorratsbehälter, insbesondere einem Mischbehälter (1) eines Tränkeautomaten, über eine Saugleitung (2) zu einer Saugstelle (4, 4.5) gelangt, **dadurch gekennzeichnet, dass** der Schalter (13) zum manuellen in Betrieb nehmen der Förderpumpe (10.5) nahe der Saugstelle (4.5) zugeordnet ist.

10. Einrichtung nach Anspruch 8 oder 9, **dadurch gekennzeichnet, dass** der Schalter (13) nuckelseitig nahe der Saugstelle (4.5) ein Halter (5.1) zugeordnet ist.

11. Einrichtung nach wenigstens einem der Ansprüche 8 bis 10, **dadurch gekennzeichnet, dass** der Saugstelle (4.5) ein Drucksensor (7.5) und/oder Mengenmesselement (21.5) vorgeschaltet ist.

12. Einrichtung nach wenigstens einem der Ansprüche 8 bis 11, **dadurch gekennzeichnet, dass** dem Mischbehälter (1) ein Ventil (6), bevorzugt ein Magnetventil nachgeschaltet ist.

13. Einrichtung nach einem der Ansprüche 8 bis 12, **dadurch gekennzeichnet, dass** der Saugstelle (4) ein Ventil (6) vorgeschaltet ist.

## Claims

1. Method of supplying domestic animals with a liquid nutriment, which passes from a hopper, more especially a mixing vessel (1) of an automatic drink-dispensing machine, via a suction pipe (2) to a suction point (4, 4.5), wherein, to start animals drinking, more especially young animals, a nutriment is conveyed to the suction point (4.5) by the operation of a pump (10.5) inserted into the suction pipe (2), **characterised in that** the pump (10.5) is switched to "throughflow" when stationary after nutriment has been conveyed from the mixing vessel (1) to the suction point (4.5).

2. Method according to claim 1, **characterised in that** a switch (13) in the vicinity of the suction point (4.5) is actuated to operate the pump (10.5) and to convey the nutriment from the mixing vessel (1) to the suction point (4.5).

3. Method according to claim 1 or 2, **characterised in that**, to determine and/or to operate the pump (10.5) provided in the suction pipe (2), a quantity measuring means (21.5) and/or a pressure sensor (7.5) between suction point (4.5) and feed pump (10.5) are/is connected therebetween, and the quantity of nutriment is accurately determined hereby.

4. Method according to at least one of claims 1 or 3, **characterised in that** at least one valve (6) is inserted into the suction pipe (2), and the quantity of liquid nutriment removed is determined over the opening time of the valve (6).

5. Method according to at least one of claims 1 to 4, **characterised in that** the quantity of liquid nutriment removed is determined via at least one pump (10.5) inserted into the suction pipe (2).

6. Method according to at least one of claims 1 to 5, **characterised in that** pressure variations are determined and compensated-for, if necessary, in order to calculate the quantity of nutriment in the suction pipe and, if necessary, an individual suction rate for each animal is determined and/or evaluated over the valve opening time and compensated-for by increases or reductions during the opening time.

7. Method according to at least one of claims 1 to 6, **characterised in that**, by adding water and/or cleaning agent to the mixing vessel (1) and by actuating the switch (13), the mixing vessels (1), suction pipe (2), pump (10.5) and suction point (4.5) are cleaned.

8. Apparatus for supplying domestic animals with a liquid nutriment, which passes from a hopper, more especially a mixing vessel (1) of an automatic drink-dispensing machine, via a suction pipe (2) to a suction point (4, 4.5), a feed pump (10.5) being inserted into the suction pipe (2), **characterised in that** the feed pump communicates with a switch (13) for manual operation, the feed pump (10.5) being switched to "throughflow" when stationary, and a connection between the suction point (4.5) and mixing vessel (1) being established to achieve virtually resistanceless suction.

9. Apparatus for supplying domestic animals with a liquid nutriment, which passes from a hopper, more especially a mixing vessel (1) of an automatic drink-dispensing machine, via a suction pipe (2) to a suction point (4, 4.5), **characterised in that** the switch (13) for the manual operation of the feed pump (10.5) is disposed in the vicinity of the suction point (4.5).

10. Apparatus according to claim 8 or 9, **characterised in that** the switch (13) has a holder (5.1) associated therewith on the teat side in the vicinity of the suction point (4.5).

11. Apparatus according to at least one of claims 8 to 10, **characterised in that** a pressure sensor (7.5) and/or a quantity measuring means (21.5) are/is connected upstream of the suction point (4.5).

12. Apparatus according to least one of claims 8 to 11, **characterised in that** a valve (6), preferably a magnetic valve, is connected downstream of the mixing vessel (1).

13. Apparatus according to one of claims 8 to 12, **characterised in that** a valve (6) is connected upstream of the suction point (4).

## Revendications

1. Procédé pour alimenter des animaux domestiques avec un aliment liquide qui arrive d'un réservoir, en particulier un réservoir mélangeur (1) d'un distributeur de boisson, par l'intermédiaire d'un conduit d'aspiration (2), à un point d'aspiration (4, 4.5), pour l'abreuvage des animaux, en particulier de jeunes animaux, des aliments étant transportés vers le point d'aspiration (4.5) par la mise en fonctionnement d'une pompe (10.5) placée dans le conduit d'alimentation (2), **caractérisé par le fait que**, après un transport d'aliments du réservoir mélangeur (1) vers le point d'aspiration (4.5), la pompe (10.5) est commutée, à l'arrêt, sur passage en continu.

2. Procédé selon la revendication 1, **caractérisé par le fait que** pour la mise en fonctionnement de la pompe (10.5) et pour le transport des aliments du réservoir mélangeur (1) vers le point d'aspiration (4.5) est actionné un interrupteur (13) près du point d'aspiration (4.5).

3. Procédé selon la revendication 1 ou 2, **caractérisé par le fait que** pour la détermination et/ou la mise en fonctionnement de la pompe (10.5) sont intercalés, dans le conduit d'aspiration (2), un élément de mesure de quantité (21.5) et/ou un capteur de pression (7.5) entre le point d'aspiration (4.5) et la pompe de refoulement (10.5) et que la quantité d'aliments est ainsi déterminée exactement.

4. Procédé selon au moins l'une des revendications 1 ou 3, **caractérisé par le fait que** dans le conduit d'aspiration (2) est incorporée au moins une soupape (6) et que la quantité d'aliments liquides prélevée est déterminée par le temps d'ouverture de la soupape (6).

5. Procédé selon au moins l'une des revendications 1 à 4, **caractérisé par le fait que** la quantité d'aliments liquides prélevée est déterminée par l'intermédiaire d'au moins une pompe (10.5) incorporée dans le conduit d'aspiration (2).

6. Procédé selon au moins l'une des revendications 1 à 5, **caractérisé par le fait que** les variations de pression sont déterminées et éventuellement compensées pour le calcul de la quantité d'aliments dans le conduit d'aspiration et que, éventuellement, une vitesse d'aspiration individuelle de chaque animal est déterminée et/ou évaluée sur le temps d'ouverture de la soupape et compensée par des augmentations ou diminutions du temps d'ouverture.

7. Procédé selon au moins l'une des revendications 1 à 6, **caractérisé par le fait que** par l'addition d'eau et/ou de détergents dans le réservoir mélangeur (1) et par l'actionnement de l'interrupteur (13) a lieu un nettoyage des réservoirs de mélange (1), du conduit d'aspiration (2), de la pompe (10.5) et du point d'aspiration (4.5).

8. Dispositif pour alimenter des animaux domestiques avec un aliment liquide arrivant d'un réservoir, en particulier un réservoir mélangeur (1) d'un distributeur de boisson, par l'intermédiaire d'un conduit d'aspiration (2), à un point d'aspiration (4, 4.5), une pompe de refoulement (10.5) étant placée dans le conduit d'aspiration (2), **caractérisé par le fait que** la pompe de refoulement est reliée à un interrupteur (13) pour la mise en fonctionnement manuelle, la pompe de refoulement (10.5) étant commutée, à l'arrêt, sur passage continu, et qu'il est établi une connexion entre le point d'aspiration (4.5) et le réservoir mélangeur (1) en vue d'une aspiration pratiquement sans résistance.

9. Dispositif pour alimenter des animaux domestiques avec un aliment liquide arrivant d'un réservoir, en particulier un réservoir mélangeur (1) d'un distributeur de boisson, par l'intermédiaire d'un conduit d'aspiration (2), à un point d'aspiration (4, 4.5), **caractérisé par le fait que** l'interrupteur (13) destiné à la mise en fonctionnement manuelle de la pompe de refoulement (10.5) est disposé près du point d'aspiration (4.5).

10. Dispositif selon la revendication 8 ou 9, **caractérisé par le fait qu'**à l'interrupteur (13) est associé, du côté de la tétine, près du point d'aspiration (4.3), un support (5.1).

11. Dispositif selon au moins l'une des revendications 8 à 10, **caractérisé par le fait qu'**avant le point d'aspiration (4.5) est connecté un capteur de pression (7.5) et/ou un élément de mesure de quantité (21.5).

12. Dispositif selon au moins l'une des revendications 8 à 11, **caractérisé par le fait qu'**après le réservoir mélangeur (1) est connectée une soupape (6), de préférence une soupape magnétique.

13. Dispositif selon au moins l'une des revendications 8 à 12, **caractérisé par le fait qu'**avant le point d'aspiration (4) est connectée une soupape (6).
